# EUROPEAN PATENT SPECIFICATION

(11) **EP 3 230 565 B1**
(45) Date of publication and mention of the grant of the patent: **27.11.2019**
(21) Application number: 15825826.9
(22) Date of filing: 09.12.2015
(51) Int. Cl.: F01N 9/00, F01N 3/025, F02D 41/02

(54) **METHOD AND SYSTEM FOR MANAGING A REGENERATION OF A PARTICULATE FILTER**
VERFAHREN UND SYSTEM ZUR VERWALTUNG EINER REGENERATION EINES PARTIKELFILTERS
PROCÉDÉ ET SYSTÈME PERMETTANT DE GÉRER UNE RÉGÉNÉRATION D'UN FILTRE À PARTICULES

(30) Priority: 09.12.2014 IT TO20141018
(43) Date of publication of application: 18.10.2017
(73) Proprietor: FPT Industrial S.p.A., 10156 Torino (IT)
(72) Inventor: CERCIELLO, Giovanni, I-10139 Torino (IT); VITIELLO, Angela, I-10139 Torino (IT)
(74) Representative: Fiume, Orazio
(86) International application number: PCT/IB2015/059464
(87) International publication number: WO 2016/092482

(56) References cited:
- EP-A1- 1 662 101
- WO-A1-2005/088095
- DE-T2- 60 007 038
- FR-A1- 2 811 370
- GB-A- 2 496 876
- US-A1- 2010 218 489
- US-A1- 2010 287 912
- US-A1- 2012 036 841
- US-B1- 6 574 956

## Description

### Field of the invention

The present invention relates to the field of internal combustion engines and in particular to the management of those components involved in the abatement of pollutants. More particularly, the invention concerns a method and system for managing a regeneration of a particulate filter.

### State of the art

DPF filters have been long employed to restrain the particulates produced by the combustion of internal combustion engines, especially diesel engines.

Such filters are called closed filters referring to the shape of the channels formed in them.

These many channels are made of porous ceramic material retaining the particulate contained in the gas passing through them.

A filter clogging is detected by measuring the pressure upstream the filter (backpressure) or by measuring a differential pressure upstream and downstream the filter. In relation to the conditions of use of the vehicle, the particulate filter may be subject to more or less frequent regeneration cycles for burning the accumulated particulate, thus clearing the filter.

Such regeneration cycles are carried out by injecting fuel into the combustion chambers during the exhaust phase in order to enter the unburnt fuel directly into the device for the after-treatment of exhaust gases (ATS) including the particulate filter. This strategy is called post-injection strategy. On the one hand, such post-injections induce high temperatures in ATS, but on the other hand they tend to deteriorate the lubricating oil of the internal combustion engine.

In particular, the fuel injected in large amounts extrudes by mixing with the engine oil. Such mixing affects the internal combustion engine, that may be damaged, and affects the fuel consumption as well.

For ease of implementation, the duration of a regeneration process is fixed and predefined taking into account possible environmental conditions that may adversely affect a perfect regeneration.

GB2496876 discloses a method of controlling soot burn in a DPF of a vehicle comprising deriving a gradient value from a change in a measured pressure difference across the DPF and controlling regeneration of the DPF in response to the derived gradient value. US2010218489 discloses a method for assessing the completeness of a regeneration of a particle filter based on a time derivative of the measured pressure difference, over the inlet/outlet of the filter, wherein the assessment of the completeness of the regeneration takes place as a function of the time derivative.

WO2005/088095 discloses another regeneration controller for eliminating particulate matter accumulated in the filter of the exhaust system of an internal combustion engine.

### Summary of the invention

A first object of the present invention is to limit the negative effects of the regeneration cycles.

According to the present invention, a method is provided for managing a regeneration of a particulate filter (DPF), the particulate filter comprising an inlet and an outlet, the method comprising carrying out a first checking process of a first condition determining interruption of a regeneration process, as function of a differential pressure calculated between said inlet and said outlet of the particulate filter, and simultaneously carrying out a second checking process of a second condition determining interruption of said regeneration process, as function of a temperature measured at the outlet of the particulate filter, and wherein the method interrupts said regeneration process when at least one of said first and second checking processes returns a positive outcome.

The basic idea of the present invention is to limit the regeneration cycles by not intervening on their frequency, but on the duration of each regeneration procedure.

More particularly, the basic idea of the present invention is to perform two or more parallel processes which estimate when a regeneration cycle can be interrupted, and when at least one of such processes has a favourable outcome, then the regeneration process of the particulate filter is forcedly interrupted.

It is clear that a regeneration process of the particulate filter can be interrupted only when it is a forced regeneration, since the processes of natural regeneration take place continuously and are always encouraged because they avoid forced regenerations.

The forced regeneration strategies generally involve the injection of unburned fuel in the exhaust line of the exhaust gas so that they burn in the filter, thus causing the combustion of the ash stored in it.

The interruption of a regeneration process is determined according to a first process based on the monitoring of the pressure differential between the inlet and the outlet of the DPF particulate filter. In particular, the differential pressure between the DPF inlet and the DPF outlet is monitored over time, and when the absolute value of a derivative over time of said pressure differential is below a third predefined threshold the regeneration process is interrupted. In parallel, the interruption of the regeneration process is determined according to a second process monitoring the temperature of the exhaust gas at the DPF outlet.

Preferably, when a difference between a DPF outlet temperature and a calculated theoretical temperature value is lower than a first threshold, the regeneration process is interrupted. For convenience, this comparison is called "comparative strategy".

The calculated theoretical temperature at the DPF outlet is preferably estimated by means of an algorithm based on the DPF geometrical characteristics, the ambient temperature, the DPF inlet temperature, the revolutions/load-related engine status and the amount of post-injected fuel, deliberately ignoring the exothermic effects of the particulate combustion. During a regeneration process, the oxidation of the particulate contributes to a raising of the DPF outlet temperature. Therefore, when the DPF outlet temperature is close to said calculated theoretical value, this means that there is no more particulate to burn, or in any case that the particulate residue is negligible. Alternatively, when the absolute value of a derivative of the DPF outlet temperature is lower than a second calculated threshold, the regeneration process is interrupted. For convenience, this strategy is called "differential".

Preferably, when the DPF outlet temperature monitoring determines an interruption of a regeneration process, it also determines the interruption of the monitoring of the derivative of the differential pressure, and vice-versa. According to the present description, the DPF inlet and the DPF outlet are marked by the direction of flow of exhaust gas, and the temperatures at the DPF inlet and at the DPF outlet implicitly refer to the circulating flow of exhaust gas.

Advantageously, the present invention allows limiting the dilution of the oil produced by regeneration, thus extending the engine oil change interval, and reducing the impact of the regeneration on fuel consumption.

Another object of the present invention is a system for managing a regeneration of a particulate filter and an internal combustion engine comprising the aforesaid managing system.

The claims describe preferred variants of the invention forming an integral part of the present description.

### Brief description of the figures

Further purposes and advantages of the present invention will become clear from the following detailed description of an embodiment thereof (and of its variants) and from the annexed drawings, given for merely illustrative and not limitative purposes, in which:
Figure 1 shows a block diagram representing the basic concept of the present invention,
Figure 2 shows a block diagram that details, according to a preferred variant of the invention, a first portion of the block diagram of Figure 1,
Figure 3 shows a block diagram that details, according to a preferred variant of the invention, a second portion of the block diagram of Figure 1,

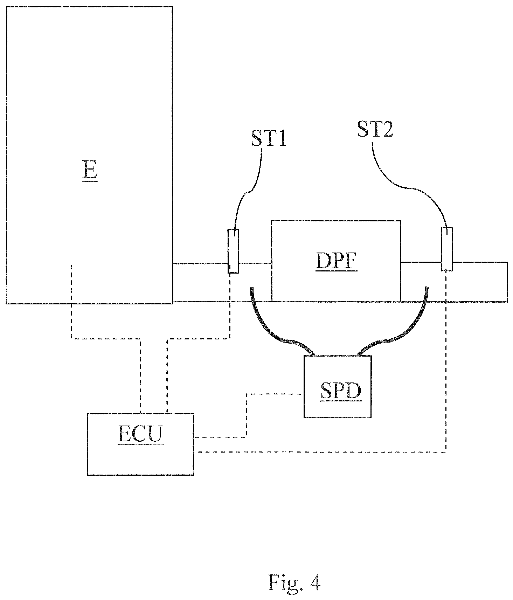

Figure 4 shows a schematic example of an internal combustion engine equipped with a particulate filter, sensors and processing means to carry out the block diagrams of the previous figures.

The same numbers and the same reference letters in the figures identify the same elements or components.

In the present description the term "second" component does not imply the presence of a "first" component. These terms are in fact used only for clarity and are not intended as limiting.

### Detailed description of embodiments

It is now described the method of the invention, which is automatically activated (1 START) when a regeneration process of a vehicle DPF starts. After its activation, the method runs continuously and stops when the regeneration process is interrupted by the method.

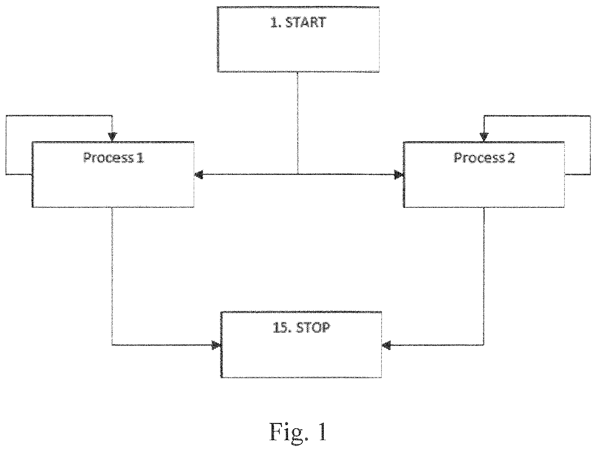

With reference to Figure 1, two parallel processes are started, one based on an estimated temperature at the outlet of the particulate filter (Process 2), the other (Process 1) based on a differential pressure calculated between the inlet and the outlet the particulate filter. The first process, indicating that the regeneration of the filter is reasonably complete, forces the interruption of the regeneration process.

According to a preferred embodiment of the invention, in case one of the two processes detects an error on the sensors on which it is based, this process stops without affecting the operation of the other process. This allows obtaining not only the object of the invention, namely limiting the dilution of the engine oil, but also a high redundancy in the monitoring system.

According to a preferred variant of the present invention, with regard to the first process, the pressure differential, calculated as the difference between the pressure at the inlet and at the outlet of a particulate filter, is monitored. When the absolute value of the derivative of such a differential pressure falls below a third calculated threshold Th3, the regeneration process is interrupted.

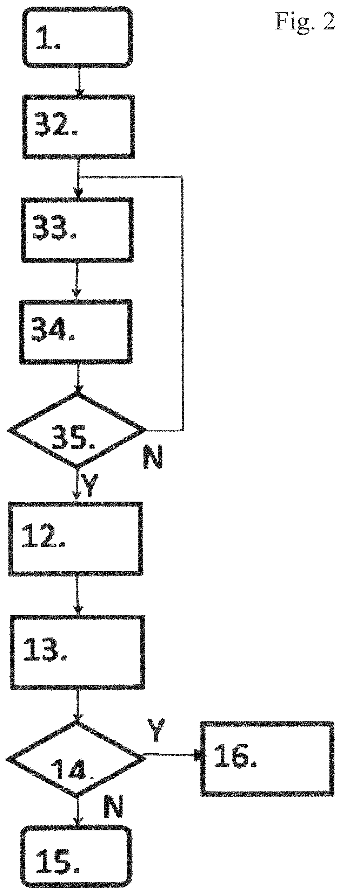

With reference to Figure 2:
Step 1: detecting the start of a DPF regeneration process,
Step 32: waiting for a time t1,
Step 33: acquiring the signal of a DPF exhaust flow resistance (FlowRes), namely of said value of differential pressure between the DPF inlet and the DPF outlet,
Step 34: calculating the absolute value (DFlowRes) of the derivative over time of said signal of a DPF exhaust flow resistance (DResflow),
Step 35: checking whether said derivative absolute value is below said third predefined threshold (DFlowRes <Th3?); if not (N), go back to Step 33, while if yes (Y) go to Step 12: waiting for a time interval t2, then
Step 13: acquiring the error status of the pressure sensors,
Step 14: checking whether there are errors on the pressure sensors, if there are no errors then
Step 15: interrupting the regeneration and interrupting the present method, but if there are errors on the pressure sensors, then
Step 16: interrupting the present process without interfering with the other parallel process.

If any error is detected on the sensors, this does not mean that the regeneration goes on forever, but rather that it remains under control of other processes. To this regard, it is also clear that the concept of interruption is absolute if compared with any further parallel process.

The second process can estimate the particulate oxidation time based on DPF inlet temperature, engine status, post-injected fuel and ambient temperature, and can maintain the regeneration process, irrespective of the DPF outlet temperature. Otherwise, a timer stops the regeneration process after its activation, regardless of the operating conditions.

According to a preferred variant of the present invention, it is also monitored the temperature at the DPF outlet carrying out another process, parallel to the previous one, based on monitoring the DPF inlet and outlet temperatures. When the monitoring process based on the DPF temperature determines the interruption of the DPF regeneration process, then the process based on the differential pressure monitoring is interrupted, and vice-versa. According to a preferred variant of the process for monitoring the temperature at the DPF outlet, the measured temperature is compared with a calculated theoretical value thus obtaining a temperature difference, and when this temperature difference is lower than a first predefined threshold, the regeneration process is interrupted. According to another preferred variant of the process for monitoring the DPF outlet temperature, the absolute value of the derivative of the DPF outlet temperature is compared with a second predefined threshold, and when the absolute value of said derivative is lower than said second predefined threshold, then it is assumed that the residual particulate in the particulate filter is negligible.

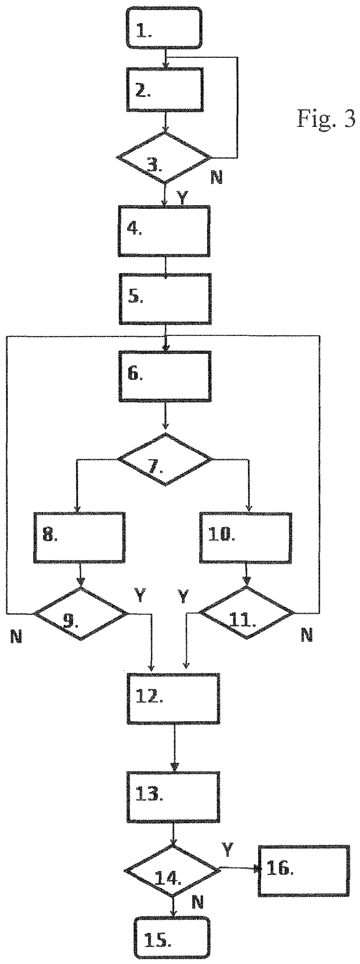

Figure 3 shows a preferred implementation of a first variant of the invention by means of a flow diagram containing the following steps in succession.

Steps 1-7 are always carried out, whereas the right or the left branches are carried out in relation to a flag which can be set during the calibration of the ECU engine control unit which usually controls the processes related to the internal combustion engine and to the relative ATS, including the DPF regeneration process.

With reference to Figure 3 then:
Step 1: detecting the start of a DPF regeneration process,
Step 2: measuring the DPF inlet temperature (TinDPF),
Step 3: if the DPF inlet temperature is higher than a fourth predefined threshold (TinDPF> Th4?), then
Step 4: waiting for a time interval t1; otherwise, if the DPF inlet temperature is NOT higher than said fourth predefined threshold, go back to step 2, then
Step 5: estimating the DPF outlet temperature in the absence of particulate, thus obtaining said calculated theoretical temperature value (ToutDPFcalc),
Step 6: measuring the DPF outlet temperature (ToutDPFmis) thus obtaining a relative value,
Step 7: checking the strategy to be implemented, whether comparative or differential: if it is comparative, go to step 8, otherwise go to step 10:
Step 8: calculating a difference between said calculated theoretical temperature and said DPF outlet temperature (ToutDPFmis - ToutDPFcalc),
Step 9: checking whether said difference is below a first threshold (ToutDPFmis - ToutDPFcalc <Th1?); if it is not below said first threshold, go back to Step 6, if it is below said first threshold, go to step 12;
   if, however, the strategy is differential, then
Step 10: calculating the derivative over time of the DPF outlet temperature (DToutDPFmis), and
Step 11: checking whether the absolute value of the derivative of the DPF outlet temperature is below said second predefined threshold (DToutDPFmis <Th2?), then
Step 12: waiting for a time t2, then
Step 13: acquiring the error status of the temperature sensors,
Step 14: checking whether there are errors on the temperature sensors, if there are no errors then
Step 15: interrupting the regeneration and interrupting the present method, but if there are errors of the temperature sensors, then
Step 16: interrupting the present method without interfering with the regeneration process.

It is immediately clear that the steps 1 and 12-16 are numbered and corresponding to those of figure 2, precisely in view of the fact that the two methods are carried out in parallel, sharing some steps.

It is immediately clear that the algorithm for estimating the theoretical value of temperature, regardless of the estimated particulate accumulation and of the relative oxidative contribution, appears to be more stable and reliable than those processes which are instead based on this estimated particulate accumulation.

It must further be clear that the two right (steps 10 and 11) and left (steps 8 and 9) branches can also be carried out in parallel, each of them being independently able to actually carry out step 15.

According to a preferred variant of the invention, besides the aforesaid method, the differential pressure generated by the particulate accumulated in the DPF is monitored in parallel.

In order to stabilize the regeneration process, it is preferable that the monitoring of the differential pressure and of the DPF outlet temperature are carried out after a predefined time interval, starting from the beginning of the regeneration process.

The aforesaid differential pressure is preferably measured by a known sensor.

The errors on the temperature sensors, just like those on the pressure sensors, are generally detected by processes generally implemented in the engine control units. Therefore, the step of storing in a database of the engine control unit the presence of errors on the sensors is already known.

An internal combustion engine E, preferably a diesel, comprises a post-treatment device of the exhaust gas ATS comprising a filter DPF.

It includes a temperature sensor at the inlet ST1 and a temperature sensor at the outlet ST2. It also includes a differential pressure sensor SPD. Said sensors are connected with the processing unit ECU which supervises the operation of the internal combustion engine and of the ATS. The present invention can be advantageously implemented by a computer program that comprises coding means for carrying out one or more steps of the method when this program is run on a computer. Therefore, it is intended that the scope of protection extends to said computer program and furthermore to computer-readable media that comprise a recorded message, said computer-readable media comprising program coding means for carrying out one or more steps of the method when said program is run on a computer.

Various embodiments of the described non-limiting example are possible without departing from the scope of protection of the present invention, comprising all the equivalent embodiments for a person skilled in the art.

From the above description, the person skilled in the art is able to implement the object of the invention without introducing any further structural detail. The elements and features shown in the various preferred embodiments can be combined without leaving the scope of protection of the present application conferred by the appended claims.

## Claims

1. Method for managing a regeneration of a particulate filter (DPF), the particulate filter comprising an inlet and an outlet, the method comprising carrying out a first checking process of a first condition determining interruption of a regeneration process, as function of a differential pressure calculated between said inlet and said outlet of the particulate filter, and simultaneously carrying out a second checking process of a second condition determining interruption of said regeneration process, as function of a temperature measured at the outlet of the particulate filter, and wherein the method interrupts said regeneration process when at least one of said first and second checking processes returns a positive outcome.

2. Method according to claim 1, wherein said positive outcome is achieved:
- for said first checking process when an absolute value of a derivative over time of said differential pressure is below a third predefined threshold,
- for said second checking process when a difference between a DPF outlet temperature and a calculated theoretical temperature value is lower than a first threshold.

3. Method according to claim 1, wherein said first process comprises:
- preliminary acquiring a differential pressure (FlowRes) between the inlet and the outlet of said particulate filter, and calculating a derivative over time (DFlowRes) of said differential pressure, and
- checking whether the absolute value of said derivative over time (DFlowRes) of said differential pressure is below a third threshold (DFlowRes < Th3).

4. Method according to one of claims 1 - 3, wherein said first checking process of said first condition comprises the following steps:
(Step 1) detecting the start of a regeneration process of the particulate filter,
(Step 32) waiting for a first predefined time interval (t1), then
(Step 33) acquiring the signal of an exhaust flow resistance of the particulate filter (FlowRes), then
(Step 34) calculating the absolute value (DFlowRes) of the derivative over time of said exhaust flow resistance signal (DResflow), then
(Step 35) checking whether said absolute value of the derivative of the resistance signal is lower than said third predefined threshold (DFlowRes < Th3?), if not (N) go back to step 33, while if yes (Y) go to (Step 12) waiting for a second predefined time interval (t2), then
(Step 13) acquiring an error status of the pressure sensors used for acquiring said exhaust flow resistance values,
(Step 14) checking whether there are errors on said pressure sensors; if there are no errors, then
(Step 15) interrupting the regeneration and interrupting the present method, but if there are errors on the temperature sensors, then
(Step 16) interrupting the check on the present first condition without interfering with the regeneration process.

5. Method according to any one of claims 1 to 4, wherein said second checking process of said second condition is comparative and comprises the following preliminary steps:
- measuring a DPF inlet temperature,
- estimating a theoretical temperature value at the DPF outlet based on at least environmental parameters,
operating parameters of a related internal combustion engine,
said DPF inlet temperature,
wherein said estimation step ignores any oxidative contribution of any particulate accumulated in the particulate filter, and wherein said function comprises calculating a difference (ToutDPFmis - ToutDPFcalc) between said theoretical temperature value and said temperature measured at the DPF outlet, and wherein said step of interrupting said regeneration process is implemented when said difference is below a first predefined threshold (ToutDPFmis - ToutDPFcalc < Th1).

6. Method according to any one of claims 1 to 4, wherein said second checking process of said second condition is differential and comprises
- preliminary monitoring of a DPF outlet temperature and calculating a derivative over time (DToutDPFmis) of that DPF outlet temperature,
- checking whether said second condition in which the absolute value of said derivative over time of said measured temperature is below a second predefined threshold (DToutDPFmis <Th2).

7. Method according to claim 5 and 6, wherein said second checking process of said second operating condition comprises the following steps:
(Step 1) detecting the start of a regeneration process of the particulate filter (DPF),
(Step 2) measuring the DPF inlet temperature (TinDPF),
(Step 3) if the DPF inlet temperature is higher than a fourth predefined threshold (TinDPF > Th4?), then (Step 4) waiting for a first predefined time interval (t1), otherwise if the DPF inlet temperature is NOT higher than said fourth predefined threshold, go back to step 2, then
(Step 5) estimating the DPF outlet temperature ignoring any contribution of any particulate, thus obtaining said calculated theoretical temperature value (ToutDPFcalc),
(Step 6) measuring the DPF outlet temperature (ToutDPFmis), thus obtaining a relative value,
(Step 7) checking a condition of a settable parameter indicating whether said second condition includes a comparative or differential check: if it is comparative, then:
(Step 8) calculating a difference between said calculated theoretical temperature value and said DPF outlet temperature (ToutDPFmis - ToutDPFcalc),
(Step 9) checking whether said difference is below a first threshold (ToutDPFmis - ToutDPFcalc<Th1?); if it is not below said first threshold, go back to step 6, if it is below said first threshold, go to step 12;
if, on the other hand, the strategy is differential, then
(Step 10) calculating the temperature derivative over time at the DPF outlet (DToutDPFmis), and
(Step 11) checking whether the absolute value of the temperature derivative at the DPF outlet is below said second predefined threshold (DToutDPFmis<Th2?), then
(Step 12) waiting for a second predefined time interval (t2), then
(Step 13) acquiring the error status of said temperature sensors,
(Step 14) checking whether there are errors on the temperature sensors, if there are no errors then
(Step 15) interrupting the regeneration process and interrupting the present method, if on the other hand there are errors on the temperature sensors,
(Step 16) interrupting the present second checking process of said second condition without interfering with the regeneration process.

8. System for managing a regeneration of a particulate filter comprising means for acquiring a differential pressure (FlowRes) between the DPF inlet and the DPF outlet, and processing means for carrying out all the steps of any one of the preceding claims 1 to 7.

9. System according to claim 8, wherein said processing means consist of a control unit of an internal combustion engine.

10. Internal combustion engine comprising a device for treating exhaust gas (ATS) comprising a particulate filter (DPF) and **characterised in that** it comprises a system for managing a regeneration of the particulate filter according to any one of claims 8 or 9.

## Patentansprüche

1. Verfahren zum Managen einer Wiederaufbereitung eines Partikelfilters (DPF), wobei der Partikelfilter einen Einlass und einen Auslass umfasst, wobei das Verfahren das Ausführen eines ersten Prozesses des Prüfens einer ersten Bedingung, die eine Unterbrechung eines Wiederaufbereitungsprozesses bestimmt, als Funktion eines Differenzdrucks, der zwischen dem Einlass und dem Auslass des Partikelfilters berechnet wird, und das gleichzeitige Ausführen eines zweiten Prozesses des Prüfens einer zweiten Bedingung, die eine Unterbrechung des Wiederaufbereitungsprozesses bestimmt, als Funktion einer Temperatur, die an dem Auslass des Partikelfilters gemessen wird, umfasst und wobei das Verfahren den Wiederaufbereitungsprozess unterbricht, wenn der erste und/oder der zweite Prüfprozess ein positives Ergebnis zurückgibt.

2. Verfahren nach Anspruch 1, wobei das positive Ergebnis erreicht wird:
- für den ersten Prüfprozess, wenn ein Absolutwert einer zeitlichen Ableitung des Differenzdrucks unter einem vordefinierten Schwellenwert liegt,
- für den zweiten Prüfprozess, wenn eine Differenz zwischen einer DPF-Auslasstemperatur und einem berechneten theoretischen Temperaturwert niedriger ist als ein erster Schwellenwert.

3. Verfahren nach Anspruch 1, wobei der erste Prozess Folgendes umfasst:
- vorläufiges Erfassen eines Differenzdrucks (FlowRes) zwischen dem Einlass und dem Auslass des Partikelfilters und Berechnen einer zeitlichen Ableitung (DFlowRes) des Differenzdrucks und
- Prüfen, ob der Absolutwert der zeitlichen Ableitung (DFlowRes) des Differenzdrucks unter einem dritten Schwellenwert liegt (DFlowRes < Th3).

4. Verfahren nach einem der Ansprüche 1-3, wobei der erste Prüfprozess der ersten Bedingung die folgenden Schritte umfasst:
(Schritt 1) Detektieren des Beginns eines Wiederaufbereitungsprozesses des Partikelfilters,
(Schritt 32) Warten während eines ersten vordefinierten Zeitintervalls (t1), dann (Schritt 33) Erfassen des Signals eines Abgasströmungswiderstands des Partikelfilters (FlowRes), dann
(Schritt 34) Berechnen des Absolutwerts (DFlowRes) der zeitlichen Ableitung des Abgasströmungswiderstandssignals (DResflow), dann
(Schritt 35) Prüfen, ob der Absolutwert der Ableitung des Widerstandssignals niedriger ist als der dritte vordefinierte Schwellenwert (DFlowRes < Th3?), falls nicht (N), Zurückkehren zu Schritt 33, während falls ja (Y), gehen zu
(Schritt 12) Warten während eines zweiten vordefinierten Zeitintervalls (t2), dann
(Schritt 13) Erfassen eines Fehlerzustands der Drucksensoren, die zum Erfassen der Abgasströmungswiderstandswerte verwendet werden,
(Schritt 14) Prüfen, ob Fehler an den Drucksensoren vorliegen; falls keine Fehler vorliegen, dann
(Schritt 15) Unterbrechen der Wiederaufbereitung und Unterbrechen des vorliegenden Verfahrens, andernfalls, falls Fehler an den Temperatursensoren vorliegen,
(Schritt 16) Unterbrechen der Prüfung der vorliegenden ersten Bedingung, ohne den Wiederaufbereitungsprozess zu stören.

5. Verfahren nach einem der Ansprüche 1 bis 4, wobei der zweite Prüfprozess der zweiten Bedingung vergleichend ist und die folgenden vorläufigen Schritte umfasst:
- Messen einer DPF-Einlasstemperatur,
- Schätzen eines theoretischen Temperaturwerts an dem DPF-Auslass mindestens auf der Grundlage von Umgebungsparametern, von Betriebsparametern einer ähnlichen Brennkraftmaschine und der DPF-Einlasstemperatur,
wobei der Schätzschritt jeglichen oxidativen Beitrag von Partikeln, die sich in dem Partikelfilter angesammelt haben, nicht berücksichtigt und wobei die Funktion das Berechnen einer Differenz (ToutDPFmis - ToutDPFcalc) zwischen dem theoretischen Temperaturwert und der an dem DPF-Auslass gemessenen Temperatur umfasst und wobei der Schritt des Unterbrechens des Wiederaufbereitungsprozesses verwirklicht wird, wenn der Unterschied unter einem ersten vordefinierten Schwellenwert liegt (ToutDPFmis - ToutDPFcalc < Th1).

6. Verfahren nach einem der Ansprüche 1 bis 4, wobei der zweite Prüfprozess der zweiten Bedingung differentiell ist und Folgendes umfasst:
- vorläufiges Überwachen einer DPF-Auslasstemperatur und Berechnen einer zeitlichen Ableitung (DToutDPFmis) dieser DPF-Auslasstemperatur,
- Prüfen, ob die zweite Bedingung gilt, bei der der Absolutwert der zeitlichen Ableitung der gemessenen Temperatur unter einem zweiten vordefinierten Schwellenwert liegt (DToutDPFmis <Th2).

7. Verfahren nach Anspruch 5 und 6, wobei der zweite Prüfprozess der zweiten Bedingung die folgenden Schritte umfasst:
(Schritt 1) Detektieren des Beginns eines Wiederaufbereitungsprozesses des Partikelfilters (DPF),
(Schritt 2) Messen der DPF-Einlasstemperatur (TinDPF),
(Schritt 3) falls die DPF-Einlasstemperatur höher ist als ein vierter vordefinierter Schwellenwert (TinDPF > Th4?), dann
(Schritt 4) Warten während eines ersten vordefinierten Zeitintervalls (t1), andernfalls, falls die DPF-Einlasstemperatur nicht höher als der vierte vordefinierte Schwellenwert ist, Zurückehren zu Schritt 2, dann
(Schritt 5) Schätzen der DPF-Auslasstemperatur ohne einen Beitrag von Partikeln zu berücksichtigen, wodurch der berechnete theoretische Temperaturwert (ToutDPFcalc) erhalten wird,
(Schritt 6) Messen der DPF-Auslasstemperatur (ToutDPFmis), wodurch ein Relativwert erhalten wird,
(Schritt 7) Prüfen einer Bedingung eines einstellbaren Parameters, der angibt, ob die zweite Bedingung eine vergleichende oder differentielle Prüfung umfasst: falls sie vergleichend ist, dann:
(Schritt 8) Berechnen einer Differenz zwischen dem berechneten theoretischen Temperaturwert und der DPF-Auslasstemperatur (ToutDPFmis - ToutDPFcalc),
(Schritt 9) Prüfen, ob die Differenz unter einem ersten Schwellenwert liegt (ToutDPFmis - ToutDPFcalc<Thl?); falls sie nicht unter dem ersten Schwellenwert liegt, Zurückkehren zu Schritt 6, andernfalls, falls sie unter dem zweiten Schwellenwert liegt, Gehen zu Schritt 12;
falls auf der anderen Seite die Strategie differentiell ist, dann
(Schritt 10) Berechnen der zeitlichen Ableitung der Temperatur an dem DPF-Auslass (DToutDPFmis) und
(Schritt 11) Prüfen, ob der Absolutwert der Temperaturableitung an dem DPF-Auslass unter dem zweiten vordefinierten Schwellenwert liegt (DToutDPFmis<Th2?), dann
(Schritt 12) Warten während eines zweiten vordefinierten Zeitintervalls (t2), dann
(Schritt 13) Erfassen des Fehlerzustands der Temperatursensoren,
(Schritt 14) Prüfen, ob Fehler an den Temperatursensoren vorliegen; falls keine Fehler vorliegen, dann
(Schritt 15) Unterbrechen des Wiederaufbereitungsprozesses und Unterbrechen des vorliegenden Verfahrens, andernfalls, falls Fehler an den Temperatursensoren vorliegen,
(Schritt 16) Unterbrechen des vorliegenden zweiten Prüfprozesses der zweiten Bedingung, ohne den Wiederaufbereitungsprozess zu stören.

8. System zum Managen einer Wiederaufbereitung eines Partikelfilters, das Mittel zum Erfassen eines Differenzdrucks (FlowRes) zwischen dem DPF-Einlass und dem DPF-Auslass und Verarbeitungsmittel zum Ausführen aller Schritte nach einem der vorhergehenden Ansprüche 1 bis 7 umfasst.

9. System nach Anspruch 8, wobei die Verarbeitungsmittel aus einer Steuereinheit einer Brennkraftmaschine bestehen.

10. Brennkraftmaschine, die eine Vorrichtung zum Behandeln von Abgasen (ATS) umfasst, die einen Partikelfilter (DPF) umfasst, und die **dadurch gekennzeichnet ist, dass** sie ein System zum Managen einer Wiederaufbereitung des Partikelfilters nach einem der Ansprüche 8 oder 9 umfasst.

## Revendications

1. Méthode pour gérer une régénération d'un filtre à particules (DPF), le filtre à particules comprenant une entrée et une sortie, la méthode comprenant la réalisation d'un premier procédé de vérification d'une première condition déterminant une interruption d'un procédé de régénération, en fonction d'une pression différentielle calculée entre ladite entrée et ladite sortie du filtre à particules, et la réalisation simultanée d'un second procédé de vérification d'une seconde condition déterminant une interruption dudit procédé de régénération, en fonction d'une température mesurée au niveau de la sortie du filtre à particules, et dans laquelle la méthode interrompt ledit procédé de régénération lorsqu'au moins l'un desdits premier et second procédés de vérification renvoie un résultat positif.

2. Méthode selon la revendication 1, dans laquelle ledit résultat positif est atteint :
- pour ledit premier procédé de vérification lorsqu'une valeur absolue d'une dérivée dans le temps de ladite pression différentielle est en dessous d'un troisième seuil prédéfini,
- pour ledit second procédé de vérification lorsqu'une différence entre une température de sortie du DPF et une valeur de température théorique calculée est inférieure à un premier seuil.

3. Méthode selon la revendication 1, dans laquelle ledit premier procédé comprend :
- l'acquisition préliminaire d'une pression différentielle (FlowRes) entre l'entrée et la sortie dudit filtre à particules, et le calcul d'une dérivée dans le temps (DFlowRes) de ladite pression différentielle, et
- le fait de vérifier si la valeur absolue de ladite dérivée dans le temps (DFlowRes) de ladite pression différentielle est en dessous d'un troisième seuil (DFlowRes < Th3).

4. Méthode selon l'une des revendications 1 à 3, dans laquelle ledit premier procédé de vérification de ladite première condition comprend les étapes suivantes :
(étape 1) la détection du début d'un procédé de régénération du filtre à particules,
(étape 32) l'attente pendant un premier intervalle de temps prédéfini (t1), puis
(étape 33) l'acquisition du signal d'une résistance d'écoulement d'échappement du filtre à particules (FlowRes), puis
(étape 34) le calcul de la valeur absolue (DFlowRes) de la dérivée dans le temps dudit signal de résistance d'écoulement d'échappement (DResflow), puis
(étape 35) le fait de vérifier si ladite valeur absolue de la dérivée du signal de résistance est inférieure audit troisième seuil prédéfini (DFlowRes < Th3 ?), si ce n'est pas le cas (N) retourner à l'étape 33, tandis que si c'est le cas (Y) aller à
(étape 12) l'attente pendant un second intervalle de temps prédéfini (t2), puis
(étape 13) l'acquisition d'un statut d'erreur des capteurs de pression utilisés pour acquérir lesdites valeurs de résistance d'écoulement d'échappement,
(étape 14) le fait de vérifier s'il y a des erreurs sur lesdits capteurs de pression ; s'il n'y a pas d'erreurs, alors
(étape 15) l'interruption de la régénération et l'interruption de la présente méthode, mais s'il y a des erreurs sur les capteurs de température, alors
(étape 16) l'interruption de la vérification sur la première condition présente sans interférer avec le procédé de régénération.

5. Méthode selon l'une quelconque des revendications 1 à 4, dans laquelle ledit second procédé de vérification de ladite seconde condition est comparatif et comprend les étapes préliminaires suivantes :
- la mesure d'une température d'entrée du DPF,
- l'estimation d'une valeur de température théorique au niveau de la sortie du DPF d'après au moins
des paramètres environnementaux,
des paramètres de fonctionnement d'un moteur à combustion interne apparenté,
ladite température d'entrée du DPF,
dans laquelle ladite étape d'estimation ignore toute contribution oxydative de toute particule accumulée dans le filtre à particules, et dans laquelle ladite fonction comprend le calcul d'une différence (ToutDPFmis - ToutDPFcalc) entre ladite valeur de température théorique et ladite température mesurée au niveau de la sortie du DPF, et dans laquelle ladite étape d'interruption dudit procédé de régénération est mise en œuvre lorsque ladite différence est en dessous d'un premier seuil prédéfini (ToutDPFmis - ToutDPFcalc < Th1).

6. Méthode selon l'une quelconque des revendications 1 à 4, dans laquelle ledit second procédé de vérification de ladite seconde condition est différentiel et comprend
- la surveillance préliminaire d'une température de sortie du DPF et le calcul d'une dérivée dans le temps (DToutDPFmis) de cette température de sortie du DPF,
- le fait de vérifier si ladite seconde condition dans laquelle la valeur absolue de ladite dérivée dans le temps de ladite température mesurée est en dessous d'un deuxième seuil prédéfini (DToutDPFmis < Th2).

7. Méthode selon les revendications 5 et 6, dans laquelle ledit second procédé de vérification de ladite seconde condition de fonctionnement comprend les étapes suivantes :
(étape 1) la détection du début d'un procédé de régénération du filtre à particules (DPF),
(étape 2) la mesure de la température d'entrée du DPF (TinDPF),
(étape 3) si la température d'entrée du DPF est supérieure à un quatrième seuil prédéfini (TinDPF > Th4 ?), alors
(étape 4) l'attente pendant un premier intervalle de temps prédéfini (t1), sinon si la température d'entrée du DPF n'est PAS supérieure audit quatrième seuil prédéfini, retourner à l'étape 2, puis
(étape 5) l'estimation de la température de sortie du DPF en ignorant toute contribution de toute particule, obtenant ainsi ladite valeur de température théorique calculée (ToutDPFcalc),
(étape 6) la mesure de la température de sortie du DPF (ToutDPFmis), obtenant ainsi une valeur relative,
(étape 7) la vérification d'une condition d'un paramètre réglable indiquant si ladite seconde condition comporte une vérification comparative ou différentielle : si elle est comparative, alors :
(étape 8) le calcul d'une différence entre ladite valeur de température théorique calculée et ladite température de sortie du DPF (ToutDPFmis - ToutDPFcalc),
(étape 9) le fait de vérifier si ladite différence est en dessous d'un premier seuil (ToutDPFmis - ToutDPFcalc < Th1 ?) ; si elle n'est pas en dessous dudit premier seuil, retourner à l'étape 6, si elle est en dessous dudit premier seuil, aller à l'étape 12 ;
si, d'autre part, la stratégie est différentielle, alors
(étape 10) le calcul de la dérivée de température dans le temps au niveau de la sortie du DPF (DToutDPFmis), et
(étape 11) le fait de vérifier si la valeur absolue de la dérivée de température au niveau de la sortie du DPF est en dessous dudit deuxième seuil prédéfini (DToutDPFmis < Th2 ?), puis
(étape 12) l'attente pendant un second intervalle de temps prédéfini (t2), puis
(étape 13) l'acquisition du statut d'erreur desdits capteurs de température,
(étape 14) le fait de vérifier s'il y a des erreurs sur les capteurs de température ; s'il n'y a pas d'erreurs, alors
(étape 15) l'interruption du procédé de régénération et l'interruption de la présente méthode, si d'autre part il y a des erreurs sur les capteurs de température,
(étape 16) l'interruption du présent second procédé de vérification de ladite seconde condition sans interférer avec le procédé de régénération.

8. Système pour gérer une régénération d'un filtre à particules comprenant des moyens d'acquisition d'une pression différentielle (FlowRes) entre l'entrée du DPF et la sortie du DPF, et des moyens de traitement pour réaliser toutes les étapes selon l'une quelconque des revendications 1 à 7 précédentes.

9. Système selon la revendication 8, dans lequel lesdits moyens de traitement consistent en une unité de commande d'un moteur à combustion interne.

10. Moteur à combustion interne comprenant un dispositif pour traiter un gaz d'échappement (ATS) comprenant un filtre à particules (DPF) et **caractérisé en ce qu'**il comprend un système pour gérer une régénération du filtre à particules selon l'une quelconque des revendications 8 ou 9.
